# EUROPÄISCHE PATENTSCHRIFT

(11) **EP 2 992 542 B1**
(45) Veröffentlichungstag und Bekanntmachung des Hinweises auf die Patenterteilung: **15.03.2017**
(21) Anmeldenummer: 14726543.3
(22) Anmeldetag: 30.04.2014
(51) Int. Cl.: H01H 3/10, H01H 9/16, H01H 19/14, H01H 3/08, B60K 35/00, B60K 37/06, B60H 1/00, G05G 1/08, G05G 1/10, H01H 19/02

(54) **BEDIENVORRICHTUNG INSBESONDERE FÜR EINE FAHRZEUGKOMPONENTE**
OPERATING DEVICE, IN PARTICULAR FOR A VEHICLE COMPONENT
DISPOSITIF DE COMMANDE, EN PARTICULIER POUR UN SYSTÈME DE VÉHICULE

(30) Priorität: 02.05.2013 DE 102013208088
(43) Veröffentlichungstag der Anmeldung: 09.03.2016
(73) Patentinhaber: Behr-Hella Thermocontrol GmbH, 70469 Stuttgart (DE)
(72) Erfinder: LAMMINGER, Egbert, 59557 Lippstadt (DE)
(74) Vertreter: dompatent von Kreisler Selting Werner - Partnerschaft von Patent- und Rechtsanwälten mbB
(86) Internationale Anmeldenummer: PCT/EP2014/058857
(87) Internationale Veröffentlichungsnummer: WO 2014/177631

(56) Entgegenhaltungen:
- DE-A1-102007 057 940
- DE-T5-112010 005 298
- DE-U- 7 308 831
- JP-A- 2008 282 773
- JP-A- 2013 026 028

## Beschreibung

Die Erfindung betriff eine Bedienvorrichtung für insbesondere eine Fahrzeugkomponente, wobei die Bedienvorrichtung insbesondere vorgesehen ist für einen Radio, ein CD- und/oder DVD-Abspielgerät, ein Navigationsgerät, ein Infotainment-Gerät, eine Heizungs-, Lüftung- und/oder Klimaanlage oder für ein Mensch-Maschine-Interface.

Bedienvorrichtungen zur manuellen Einstellung/Vorgabe von Betriebsparametern elektrischer Geräte bzw. Komponenten sind in vielfachen Ausgestaltungen bekannt. Zumeist weisen derartige Bedienvorrichtungen einen sogenannten Drehsteller auf, bei dem es sich um ein Drehbedienelement handelt, das an einer Lagereinheit drehbar gelagert ist.

Aus Kostengründen sind die mechanischen Komponenten von Bedienvorrichtungen als Kunststoff-Spritzgussteile gefertigt, die zur Gewährleistung einer ebenfalls kostengünstigen Montage verrastet oder verklipst werden, sofern sie miteinander zu verbinden sind. Derartige Rast- bzw. Klipsverbindungen finden auch für die Abzugssicherung von Drehbedienelementen von Bedienvorrichtungen Anwendung. Nachteilig bei Rast- bzw. Klipsverbindungen ist, dass sich die beiden derart miteinander verbundenen Teile aufgrund der Elastizität der Rastverbindungselemente (bspw. flexible Rastarme) bei großen Abzugskräften wieder lösen können.

Aus DE-A-10 2007 051 716, DE-A-44 31 281, DE-C-34 27 936, DE-A-33 46 243, DE-A-33 35 665, DE-T-11 2010 005 298, DE-U-73 08 831, EP-A-0 031 004, JP-A-2008 282773 und JP-A-2013 026028 sind verschiedene Konstruktionen zur Sicherung von Rast- bzw. Klipsverbindungen bei Kunststoffteilen bekannt.

Eine Bedienvorrichtung mit den Merkmalen des Oberbegriffs des Anspruchs 1 ist aus DE-A-10 2007 057 940 bekannt.

Aufgabe der Erfindung ist es, eine Bedienvorrichtung mit mindestens einem Drehsteller zu schaffen, der trotz Verrastung bzw. Verklipsung hohen Abzugskräften standhält.

Zur Lösung dieser Aufgabe wird mit der Erfindung eine Bedienvorrichtung insbesondere für eine Fahrzeugkomponente wie z.B. eine Heizungs-, Lüftungs- und/Klimaanlage vorgeschlagen, wobei die Bedienvorrichtung versehen ist mit
- einem um eine Drehachse drehbar gelagerten Drehbedienelement,
- einer die Drehachse definierenden, von einem Trägerelement aufragenden Hohlwelle mit einer Zylinderwand, die eine erste Mantelfläche und eine dieser abgewandten zweite Mantelfläche aufweist,
- einem an dem Drehbedienelement angeordneten Drehlagerelement, das an der ersten Mantelfläche der Hohlwelle anliegt und einen Abstützvorsprung aufweist, der sich an dem dem Trägerelement abgewandten offenen axialen Ende der Hohlwelle abstützt, und
- einem Niederhalteelement, das an der zweiten Mantelfläche der Hohlwelle anliegt und einen Übergreifvorsprung aufweist, welcher den Abstützvorsprung des Drehlagerelements übergreift,
- wobei das Niederhalteelement mindestens einen elastischen Rastarm zur Rastverbindung mit der Hohlwelle an deren zweiten Mantelfläche aufweist und
- wobei der Rastarm zur Verhinderung einer zur Aufhebung des Rasteingriffs führenden Verbiegung mit einer Verriegelungsausnehmung des Trägerelements oder mit einem von dem Trägerelement aufragenden Verriegelungselement zusammenwirkt.

Die erfindungsgemäße Bedienvorrichtung weist mindestens ein Bedienelement auf, das erfindungsgemäß als Drehbedienelement ausgeführt ist. Dieses Drehbedienelement ist um eine als Hohlwelle ausgebildete Achse drehbar gelagert, wobei die Hohlwelle eine Zylinderwand aufweist, die eine Außenumfangsfläche (erste Mantelfläche) und eine Innenumfangsfläche (zweite Mantelfläche) umfasst. An der Hohlwelle ist das Drehbedienelement über ein Drehlagerelement gelagert, das an einer der beiden Mantelflächen anliegt (diese Mantelfläche wird nachfolgend erste Mantelfläche genannt). Das Drehlagerelement stützt sich dabei über einen Abstützvorsprung an einem der beiden offenen axialen Enden der Hohlwelle ab. Die Hohlwelle selbst ragt von einem Trägerelement auf bzw. überragt ein Trägerelement, wobei der Abstützvorsprung die Zylinderwand der Hohlwelle an dessen dem Trägerelement abgewandten, offenen axialen Ende übergreift. Damit sind das Drehlagerelement und somit auch das Drehbedienelement gegen ein axiales Verrutschen längs der Hohlwelle in Richtung auf das Trägerelement gesichert.

Gegenüber Abzugskräften gesichert wird das Drehlagerelement und damit das Drehbedienelement mittels eines Niederhalteelements, das an der zweiten Mantelfläche der Hohlwelle anliegt und einen Übergreifvorsprung aufweist, welcher den Abstützvorsprung des Drehlagerelements übergreift. Der Abstützvorsprung des Drehlagerelements ist also zwischen dem Stirnende der Zylinderwand der Hohlwelle und dem Übergreifvorsprung des Niederhalteelements "gefangen". Das Niederhalteelement seinerseits ist nun rastend mit der Hohlwelle verbunden, und zwar an deren zweiten Mantelfläche. Hierzu weist es mindestens einen elastisch verbiegbaren Rastarm zum Rasteingriff mit der Hohlwelle (d.h. einem Vorsprung oder einer Vertiefung an der Hohlwelle) auf. Damit ist das Niederhalteelement also gegen ein Ablösen von der Hohlwelle gesichert.

Wie oben erwähnt, sollte bei Rastverbindungen verhindert werden, dass sich diese ungewollt lösen, wenn auf die über die Rastverbindungen verbundenen Teile größere Abzugskräfte wirken. Erfindungsgemäß wird dies nun bei der Abzugssicherung der hier beschriebenen Bedienvorrichtung dadurch erreicht, dass der Rastarm gegen eine Ausrückbewegung, die zur Aufhebung des Rasteingriffs führen kann, verriegelt bzw. gesichert ist. Dies erfolgt erfindungsgemäß dadurch, dass der Rastarm bzw. jeder Rastarm - allgemein ausgedrückt - durch einen Formschluss mit dem Trägerelement oder einem von diesem aufragenden Verriegelungselement verriegelt ist. Im einfachsten Fall ragt der Rastarm in eine Verriegelungsausnehmung (bzw. -vertiefung) oder durch eine Verriegelungsausnehmung des Trägerelements hindurch. Bei diesem Trägerelement kann es sich um dasjenige Element handeln, von dem die Hohlwelle aufragt; als Trägerelement kann aber erfindungsgemäß auch ein von der Hohlwelle getrennt ausgebildetes Teil dienen, bspw. eine Leiterplatine, auf der elektrische Schaltungen, elektrische Bauteile und elektronische und optoelektronische Komponenten der Bedienvorrichtung angeordnet sind. Durch einen mechanischen Eingriff des mindestens einen Rastarms mit dem Trägerelement oder einem anderen Verriegelungselement lässt sich also erfindungsgemäß verhindern, dass der Rastarm nach der Montage des Drehbedienelements noch Bewegungen ausführen kann, die zur Aufhebung des Rasteingriffs führen könnten. Diese Abzugssicherung wird vorteilhafterweise erfindungsgemäß im Zuge der Montage und damit sozusagen automatisch realisiert.

Die Vorzüge der erfindungsgemäßen Abzugssicherung für ein Drehbedienelement einer Bedienvorrichtung lassen sich nachfolgend zusammenfassend wie folgt darstellen:
- Reduktion der Druckspannungen auf die radiale Führung, wodurch das nur recht aufwändig "kalkulierbare" Risiko einer Verspannung auf die radiale Lagerung des Drehbedienelements reduziert ist;
- die Leiterkarte bzw. ein anderweitiges, bei der Bedienvorrichtung vorhandenes Trägerelement wird zur Sicherung des Drehbedienelements mit eingebunden;
- die Leiterkarte erhält damit eine funktionserweiternde Aufgabe;
- die Abzugssicherung ist ohne Mehraufwand bei der Montage umsetzbar;
- der Einsatz von zusätzlichen Bauteilen zur Abzugssicherung wird vermieden; die Haltekraft führt zu keinerlei Verformungen, die sich auf das Radiallager auswirken (Polynomform); bei der Montage sind nur geringfügige Montage- und Fügekräfte erforderlich, so dass die Montage insbesondere leichtgängig erfolgt, dennoch aber sehr hohe Demontagekräfte realisiert werden;
- die verringerten Montage- und Fügekräfte, die erfindungsgemäß tolerabel sind, führen zu einer leichtgewichtigeren und materialsparenden Gesamtkonstruktion, was die Abzugssicherung betrifft, ohne dass die Größe der maximalen Abzugskräfte denen das Drehbedienelement noch widersteht, verringert sind; dies wird erfindungsgemäß durch die sekundäre Verriegelung der Rastarme realisiert;
- die erfindungsgemäße Abzugssicherung kann auch mit dem Gegenstand der parallelen PCT-Anmeldung der Anmelderin kombiniert werden, die mit gleichem Anmeldetag wie die vorliegende PCT-Anmeldung beim Europäischen Patentamt eingereicht ist (Titel: Bedienvorrichtung insbesondere für eine Fahrzeugkomponente; Anwaltsaktenzeichen: 141031wo); der Gegenstand dieser weiteren PCT-Anmeldung wird hiermit durch Bezugnahme zum Gegenstand der vorliegenden PCT-Anmeldung.

Das erfindungsgemäße Konzept der Abzugssicherung lässt sich bei Rastverbindungen von Drehbedienelementen an Drehlagerachsen realisieren, die entweder an der Innenseite der Drehlager-Hohlwelle oder an deren Außenseite oder sowohl an der Innen- als auch Außenseite der Drehlager-Hohlwelle angeordnet sind. Im Regelfall ist das Niederhalteelement drehfest mit der Hohlwelle verbunden, so dass es sich nicht mitdreht, wenn das Drehbedienelement verdreht wird. Wenn das Niederhalteelement außen an der Hohlwelle angreift, so befindet sich das Drehlagerelement des Drehbedienelements an der Innenseite der Hohlwelle. Bei dieser Ausgestaltung kann das Drehbedienelement als Drehknopf ausgebildet sein, der sich als Ganzes verdrehen lässt, also keinerlei zentral angeordneten, feststehenden sich nicht mitdrehenden Bestandteil aufweisen muss. Bei Lagerung des Drehlagerelements an der Außenseite der Hohlwelle befindet sich dementsprechend das Niederhalteelement nach Art eines Einsatzteils in der Hohlwelle. Bei dieser Ausgestaltung kann das Niederhalteelement bis in die Ebene des Drehbedienelements hinein verlängert sein, so dass das Drehbedienelement dann als Drehring ausgebildet ist, der das feststehende Niederhalteelement umgibt. Selbstverständlich könnte aber auch bei dieser Ausgestaltung der Erfindung, bei der das Drehlagerelement außen an der Hohlwelle anliegt, das Drehbedienelement wiederum als Drehknopf ohne feststehende, also sich nicht mitdrehenden Zentralbereich ausgebildet sein.

Vorteilhafterweise ist das Drehbedienelement mit einem feststehenden Bereich versehen. Hierzu ist bei einer Variante der Erfindung vorgesehen, dass die erste Mantelfläche die Innenumfangsfläche der Zylinderwand der Hohlwelle und die zweite Mantelfläche die Außenumfangsfläche der Zylinderwand der Hohlwelle ist, dass das Niederhalteelement in die Hohlwelle eingesetzt ist und ein über die Hohlwelle axial überstehendes Ende aufweist, welches ein Abschlussteil aufweist, und dass das Drehbedienelement als Drehring-Bedienelement ausgebildet ist, welches das Abschlussteil von außen umgibt.

Das Abschlussteil kann als hinterleuchtetes Element (mit mindestens einem Funktionssymbol o.dgl. Symbolfeld) oder aber auch als Taster o.dgl. ausgebildet sein. Auch der Taster kann hinterleuchtet sein. Die Anzeige des Funktionssymbols kann passiv oder aktiv (bspw. durch ein Display) erfolgen.

In weiterer zweckmäßiger Ausgestaltung der Erfindung kann vorgesehen sein, dass in dem Niederhalteelement ein Reflektor zur Reflektion von Licht einer Hinterleuchtungslichtquelle zum Abschlussteil angeordnet ist, wobei am Abschlussteil mindestens ein hinterleuchtbares Funktionssymbol optisch darstellbar ist.

Ferner ist es bei einer weiteren Alternative der erfindungsgemäßen Bedienvorrichtung möglich, dass das Trägerelement einteilig mit der Hohlwelle ausgebildet ist oder dass die Hohlwelle mit ihrem dem Drehelement abgewandten axialen Ende dem Trägerelement gegenüberliegend angeordnet ist und insbesondere an dem Trägerelement anliegt.

Die sekundäre Verriegelung des mindestens einen Rastarms kann bspw. dadurch erfolgen, dass der Rastarm in die Verriegelungsausnehmung des Trägerelements eingetaucht ist und sich insofern ein Formschluss (ggf. mit geringfügigem Spiel) bildet. Alternativ ist es möglich, dass der Rastarm in eine Aufnahmevertiefung des Verriegelungselements eingetaucht ist oder selbst eine Aufnahmevertiefung aufweist, in die ein Verriegelungsvorsprung des Verriegelungselements oder das Verriegelungselement eingetaucht ist. Dabei kann das Verriegelungselement durch eine Aussparung des Trägerelements hindurch über dieses hinaus aufragen. In all diesen Fällen erfolgt die mechanische Verriegelung des Rastarmes durch einen Formschluss (mit Toleranzspiel o.dgl. geringfügiger Bewegungsfreiheit).

Ferner kann es zweckmäßig sein, wenn die Bedienvorrichtung ein innerhalb des Niederhalteelements - oder alternativ außerhalb des Niederhalteelements - angeordnetes feststehendes Widerlagerelement aufweist, das mit Abstand zum Rastarm positioniert ist und diesem gegenüberliegt, wobei ein Lichtleitelement zum Leiten von Licht einer Lichtquelle zu einer Leuchtmarkierung an dem Drehbedienelement - oder alternativ neben dem Drehbedienelement - vorgesehen ist und zur weiteren Verriegelung des Rastarms nach Art eines Passstücks sowohl an dem Rastarm als auch an dem Widerlagerelement anliegt. Das Widerlagerelement kann als in dem Niederhalteelement eingesetzter Reflektor zum Leiten von Licht einer Hinterleuchtungslichtquelle zum Drehbedienelement oder als z.B. am Trägerelement angeordnetes Abstützelement ausgebildet sein, das außerhalb des Niederhalteelements angeordnet ist, wobei die Leuchtmarkierung im ersten Fall an dem Drehbedienelement und im zweiten Fall neben dem Drehbedienelement an einer (Front-)Blende ausgebildet ist (siehe die weiter oben bereits angeführte PCT-Parallelanmeldung vom heutigen Tage mit Anwaltsaktenzeichen: 141031wo).

Die Erfindung wird nachfolgend anhand zweier Ausführungsbeispiele und unter Bezugnahme auf die Zeichnung näher erläutert. Im Einzelnen zeigen dabei:
- Fig. 1: einen Längsschnitt (schematisch) durch eine Bedienvorrichtung mit einem Drehsteller gemäß einem ersten Ausführungsbeispiel,
- Fig. 2: eine Explosionsdarstellung der Bedienvorrichtung im Längsschnitt gemäß Fig. 1,
- Fign. 3 und 4: Teilansichten (III, IV, siehe den Kreis in Fig. 1) alternativer Verriegelungsausführungen der Rastarme und
- Fig. 5: im Längsschnitt und schematisch ein zweites Ausführungsbeispiel der Bedienvorrichtung.

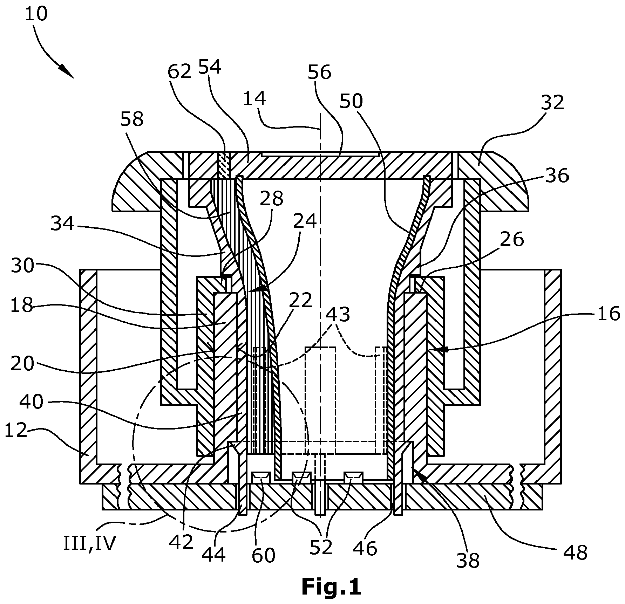

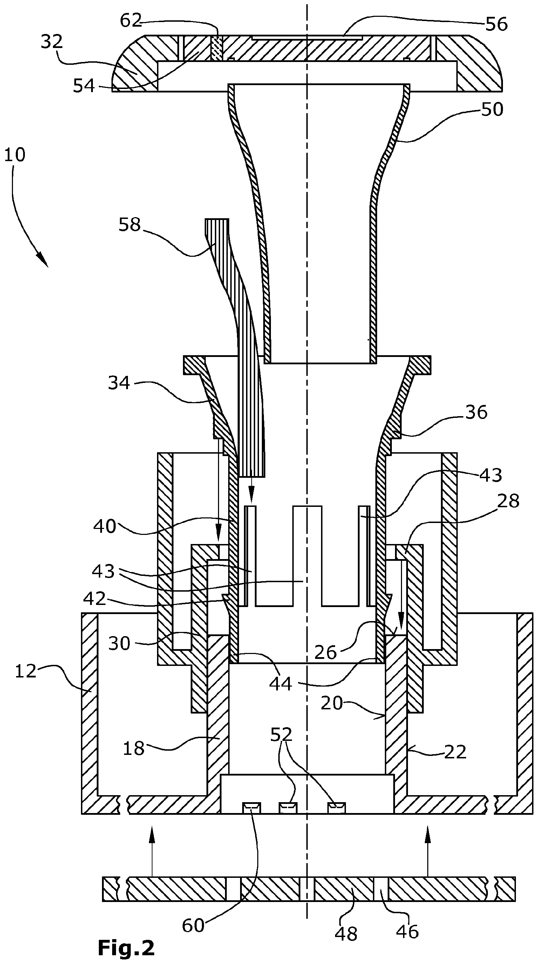

In den Fign. 1 und 2 ist im Längsschnitt eine Bedienvorrichtung 10 gemäß einem ersten Ausführungsbeispiel gezeigt, wobei die Bedienvorrichtung 10 sich auf einen Drehstelleraufbau bezieht. Die Bedienvorrichtung 10 weist ein Trägerelement 12 auf, von dem eine eine Drehachse 14 definierende Hohlwelle 16 aufragt. Die Hohlwelle 16 umfasst eine Zylinderwand 18 mit einer Außenumfangsfläche 20 (erste Mantelfläche) und einer Innenumfangfläche 22 (zweite Mantelfläche). An dem oberen freien, offenen axialen Ende 24 der Hohlwelle 16 liegt auf der Ringstirnfläche 26 der Zylinderwand 18 ein Abstützvorsprung 28 eines Drehlagerelements 30 an, das ein Drehring-Bedienelement 32 trägt.

In die Hohlwelle 16 eingeführt ist ein Niederhalteelement 34, das an der zweiten Mantelfläche 22 der Hohlwellen-Zylinderwand 18 anliegt und einen Übergreifvorsprung 36 aufweist, der den Abstützvorsprung 28 des Drehlagerelements 30 übergreift. An dem dem axialen Ende 38 gegenüberliegenden axialen Ende der Hohlwelle 16 ist das Niederhalteelement 34 mit der Hohlwelle 16 rastend verbunden. Zu diesem Zweck weist das Niederhalteelement 34 mindestens einen Rastarm 40 auf, an dessen Ende sich ein Rasthaken 42 befindet. Der bzw. die Rastarme 40 sind gebildet durch Schlitze 43 in dem Niederhalteelement 34, wodurch die Bereiche zwischen den Schlitzen 43, also die Rastarme 40 flexibel und elastisch nach innen verbiegbar sind, wenn das Niederhalteelement 34 in die Hohlwelle 16 eingeschoben wird und die Rastvorsprünge bzw. Rasthaken 42 sich innen auf der Hohlwelle 16 vorbeibewegen und entlanggleiten.

Durch die Rastverbindung ist das Niederhalteelement 34 gegen ungewollt Abzugsbewegungen an der Hohlwelle 16 gesichert, womit wiederum das Drehlagerelement 30 und damit das Drehring-Bedienelement 32 gegen Abzugskräfte gesichert ist; denn der Abstützvorsprung 28 des Drehlagerelements 30 ist zwischen der Zylinderwand 18 und dem Übergreifvorsprung 36 des Niederhalteelements 34 "eingefangen".

Um zu verhindern, dass sich die Rastarme 40 ungewollt einwärts bewegen (,wenn nämlich beispielsweise mit einer großen Abzugskraft an dem Drehring-Bedienelement 32 gezogen wird), weisen die Rastarme 40 sich über die Rasthaken 42 hinaus erstreckende z.B. stiftförmige Verriegelungsansätze 44 auf, die in Verriegelungsausnehmungen bzw. -aussparungen 46 einer Trägerplatte 48 formschlüssig bzw. mit geringem Spiel eintauchen. Die Trägerplatte 48 kann dabei als Leiterplatine ausgebildet sein, die nach der Montage des Drehring-Bedienelements 32 von unten gegen das Trägerelement 12 bewegt wird (siehe die Pfeile in Fig. 2). Durch das Eintauchen der Verriegelungsansätze 44 in die Verriegelungsausnehmungen 46 der Trägerplatte 48 können die Rastarme 40 nun nicht mehr seitwärts bzw. einwärts verrückt werden, so dass die Rastverbindung "gefangen", d.h. gesichert ist.

Bei dem Ausführungsbeispiel gemäß den Fign. 1 und 2 befindet sich in dem Niederhalteelement 34 noch ein Reflektor 50, der Hinterleuchtungslicht von in diesem Fall zwei Lichtquellen 52, die auf der Trägerplatte 48 angeordnet sein können, zu einem Abschlussteil 54 leitet, welches von dem Niederhalteelement 34 bzw. dem Reflektor 50 gehalten ist. Hierdurch ist es möglich, ein Funktionssymbol 56 o.dgl. Symbolfeld des Abschlussteils 54 zu hinterleuchten. Das Abschlussteil 54 ist als feststehendes Element im Inneren des Drehring-Bedienelements 32 ausgebildet, dreht sich also mit diesem nicht mit. Das Abschlussteil 54 kann als Deckel oder Taster ausgebildet sein oder kann einen Taster aufweisen. Auch ist es denkbar, dass das Abschlussteil 54 selbst als aktives Display zur Anzeige von Symbolen ausgebildet ist oder ein solches Display aufweist.

Wie in den Fign. 1 und 2 angedeutet bzw. dargestellt, kann neben der zuvor beschriebenen Sekundärsicherung der Rastarme noch eine weitere Sicherung dieser Rastarme gegen eine ungewollte Entriegelung vorgesehen sein. Diese zusätzliche Sekundärsicherung ist aber nach der Erfindung nicht zwingend erforderlich.

Gemäß den Fign. 1 und 2 befindet sich zwischen einem Rastarm und/oder jedem Rastarm 40 und dem Reflektor 50 ein Lichtleitelement 58, das nach Art eines Passstücks zwischen dem Niederhalteelement 34 und dem Reflektor 50 angeordnet ist. Dieses Lichtleitelement 58 leitet in diesem Ausführungsbeispiel Licht von einer Lichtquelle 60 zu einer Leuchtmarkierung 62 in dem Abschlussteil. Das Lichtleitelement 58 sperrt nun den Rastarm 40 zusätzlich und verhindert somit eine Bewegung des Rastarms 40, die zu einer Aufhebung des Rasteingriffs des Rastarms 40 mit der Hohlwelle 16 führen könnte.

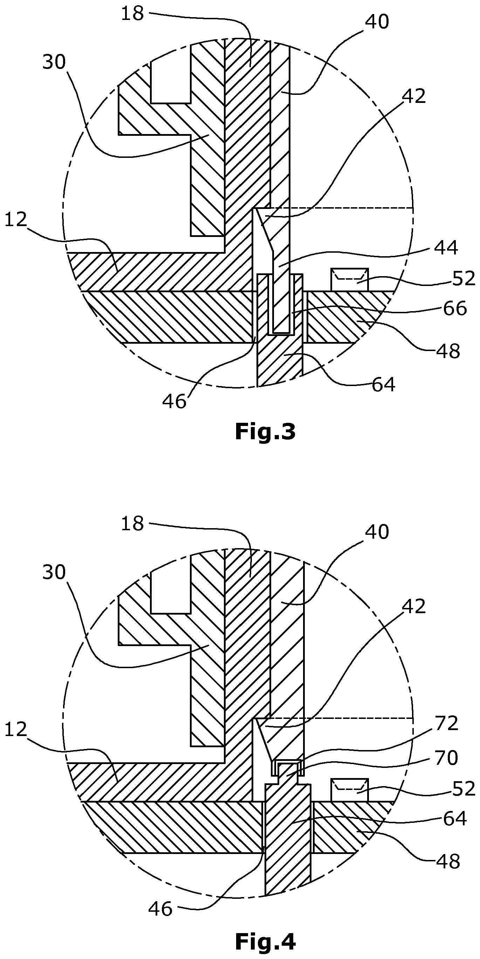

In den Fign. 3 und 4 sind alternative Ausgestaltungen der Sekundärsicherung der Rastarme 40ohne weitere Sicherung durch z.B. ein Passstück wie z.B. ein Lichtleitelement gezeigt. Gemäß Fig. 2 ragt durch die Trägerplatte 48 ein Verriegelungselement 64 hindurch, das eine Verriegelungsvertiefung 66 aufweist, in die der Verriegelungsansatz 44 eines Rastarmes 40 eingetaucht ist. Bei der in Fig. 3 mit 48 bezeichneten Trägerplatte kann es sich aber auch um den unteren Bereich des Trägerelements 12 handeln, von dem die Hohlwelle 16 mit ihrer Zylinderwand 18 aufragt.

In Fig. 4 ist gezeigt, dass ein Verriegelungselement 68 wiederum durch eine Verriegelungsausnehmung 46 der Trägerplatte 48 aufragt und mit einem Verriegelungsvorsprung 70 in eine Verriegelungsausnehmung 72 eines Rastarmes 40 eintaucht. Bei dieser Ausgestaltung der Erfindung weist also der Rastarm 40 selbst keinen Verriegelungsansatz auf. Auch bezüglich Fig. 4 gilt, dass es sich bei dem mit 48 bezeichneten Element auch um den unteren Bereich des Trägerelements 12 der Fig. 1 handeln kann, von dem die Hohlwelle 16 bzw. deren Zylinderwand 18 aufragt.

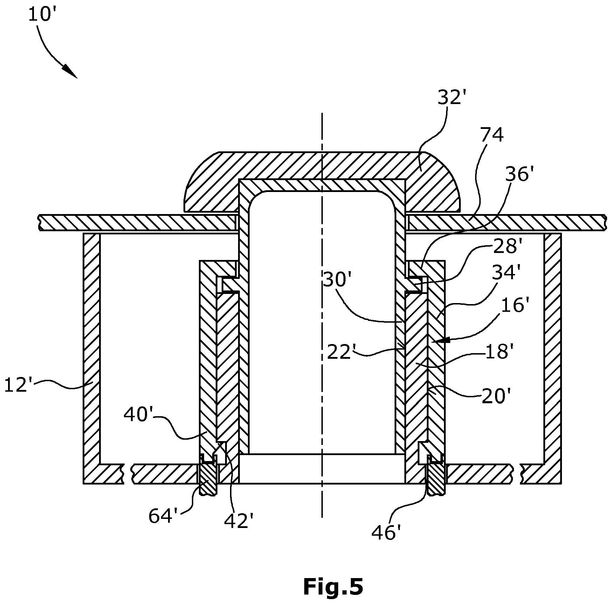

Schließlich zeigt Fig. 5 noch ein weiteres Ausführungsbeispiel der Erfindung, bei dem die Rastverbindung des Niederhalteelements 34' mit der Zylinderwand 18' der Hohlwelle 16' außenliegend angeordnet ist, während das Drehlagerelement 30' an der Innenumfangsfläche 22' der Zylinderwand 18' der Hohlwelle 16' anliegt. Die Verriegelung/Sperrung eines Rastarms 40' erfolgt in diesem Ausführungsbeispiel, indem, ähnlich wie in den Fign. 3 und 4, durch eine Ausnehmung 46' in dem Trägerelement 12' ein Verriegelungselement (siehe bei 64') hindurchragt, das den Rastarm 40' sperrt. Zusätzlich kann, wenn dies gewünscht ist, auch noch ein Lichtleitelement oder allgemein Passstück außen an dem Niederhalteelement 34' bzw. an dessen Rastarm 40' sperrend anliegen. Eine Blende 74 o.dgl. Abdeckung umgibt das Drehbedienelement 32' und könnte, wenn ein Lichtleitelement als zusätzliches Passstück eingesetzt wird, eine Leuchtmarkierung aufweisen.

In Fig. 5 sind noch weitere Elemente mit Bezugszeichen versehen, die denen gemäß den Fign. 1 bis 4 funktional bzw. konstruktiv entsprechen und mit den gleichen Bezugszeichen versehen sind.

### BEZUGSZEICHENLISTE

- 10: Bedienvorrichtung
- 10': Bedienvorrichtung
- 12: Trägerelement der Bedienvorrichtung
- 12': Trägerelement der Bedienvorrichtung
- 14: Drehachse des Drehring-Bedienelements
- 16: Hohlwelle
- 16': Hohlwelle
- 18: Zylinderwand der Hohlwelle
- 18': Zylinderwand der Hohlwelle
- 20: Außenumfangsfläche der Zylinderwand
- 20': Außenumfangsfläche der Zylinderwand
- 22: Innenumfangfläche der Zylinderwand
- 22': Innenumfangfläche der Zylinderwand
- 24: axiales offenes Ende der Hohlwelle
- 26: Ringstirnfläche
- 28: Abstützvorsprung des Niederhalteelements
- 28': Abstützvorsprung des Niederhalteelements
- 30: Drehlagerelement des Drehring-Bedienelements
- 30': Drehlagerelement des Drehring-Bedienelements
- 32: Drehring-Bedienelement
- 32': Drehring-Bedienelement
- 34: Niederhalteelement
- 34': Niederhalteelement
- 36: Übergreifvorsprung des Niederhalteelements
- 38: Ende der Hohlwelle
- 40: Rastarm
- 40': Rastarm
- 42: Rasthaken des Rastarms
- 42': Rasthaken des Rastarms
- 43: Schlitze
- 44: Verriegelungsansatz am Rastarm
- 46: Verriegelungsausnehmung in der Trägerplatte
- 46': Verriegelungsausnehmung in der Trägerplatte
- 48: Trägerplatte (z.B. Platine)
- 50: Reflektor
- 52: Lichtquelle
- 54: Abschlussteil des Drehring-Bedienelements
- 56: Funktionssymbol
- 58: Lichtleitelement
- 60: Lichtquelle des Lichtleitelements
- 62: Leuchtmarkierung des Abschlussteils
- 64: Verriegelungselement für einen Rastarm
- 64': Verriegelungselement für einen Rastarm
- 66: Verriegelungsvertiefung des Verriegelungselements
- 68: Verriegelungselement für einen Rastarm
- 70: Verriegelungsvorsprung des Verriegelungselements
- 72: Verriegelungsausnehmung im Rastarm
- 74: (Front-)Blende

## Patentansprüche

1. Bedienvorrichtung insbesondere für eine Fahrzeugkomponente wie z.B.
eine Heizungs-, Lüftungs- und/Klimaanlage mit
- einem um eine Drehachse (14) drehbar gelagerten Drehbedienelement (32),
- einer die Drehachse (14) definierenden, von einem Trägerelement (12) aufragenden Hohlwelle (16) mit einer Zylinderwand (18), die eine Außenumfangsfläche als eine erste Mantelfläche (20) und eine dieser abgewandte Innenumfangsfläche als zweite Mantelfläche (22) aufweist,
- einem an dem Drehbedienelement (32) angeordneten Drehlagerelement (30), das an der ersten Mantelfläche (20) der Hohlwelle (16) anliegt und einen Abstützvorsprung (28) aufweist, der sich an dem dem Trägerelement (12) abgewandten offenen axialen Ende (24) der Hohlwelle (16) abstützt, und
- einem Niederhalteelement (34), das an der zweiten Mantelfläche (22) der Hohlwelle (16) anliegt und einen Übergreifvorsprung (36) aufweist, welcher den Abstützvorsprung (28) des Drehlagerelements (30) übergreift,
- wobei das Niederhalteelement (34) mindestens einen elastischen Rastarm (40) zur Rastverbindung mit der Hohlwelle (16) an deren zweiten Mantelfläche (22) aufweist,
**dadurch gekennzeichnet,**
- **dass** der Rastarm (40) zur Verhinderung einer zur Aufhebung des Rasteingriffs führenden Verbiegung mit einer Verriegelungsausnehmung (46) des Trägerelements (12) oder mit einem von dem Trägerelement (12) aufragenden Verriegelungselement (64) zusammenwirkt.

2. Bedienvorrichtung nach Anspruch 1, **dadurch gekennzeichnet, dass** das Niederhalteelement (34) in die Hohlwelle (16) eingesetzt ist sowie ein über die Hohlwelle (16) axial überstehendes Ende aufweist, welches ein Abschlussteil (54) aufweist, und dass das Drehbedienelement (32) als Drehring-Bedienelement ausgebildet ist, welches das Abschlussteil (54) von außen umgibt.

3. Bedienvorrichtung nach Anspruch 2, **dadurch gekennzeichnet, dass** in dem Niederhalteelement (34) ein Reflektor (50) zur Reflektion von Licht einer Hinterleuchtungslichtquelle (52) zum Abschlussteil (54) angeordnet ist, wobei am Abschlussteil (54) mindestens ein hinterleuchtbares Funktionssymbol (56) optisch darstellbar ist.

4. Bedienvorrichtung nach einem der Ansprüche 1 bis 3, **dadurch gekennzeichnet, dass** das Trägerelement (12) einteilig mit der Hohlwelle (16) ausgebildet ist oder dass die Hohlwelle (16) mit ihrem dem Drehbedienelement (32) abgewandten axialen Ende dem Trägerelement (12) gegenüberliegend angeordnet ist und insbesondere an dem Trägerelement (12) anliegt.

5. Bedienvorrichtung nach einem der Ansprüche 1 bis 4, **dadurch gekennzeichnet, dass** das Verriegelungselement (64) durch eine Aussparung (46) des Trägerelements (12) hindurch und/oder über dieses hinausragt.

6. Bedienvorrichtung nach einem der Ansprüche 1 bis 5, **dadurch gekennzeichnet, dass** der Rastarm (40) (i) in eine Aufnahmevertiefung (66) des Verriegelungselements (64) eingetaucht ist oder (ii) eine Aufnahmevertiefung (72) aufweist, in die ein Verriegelungsvorsprung (70) des Verriegelungselements (64) eingetaucht ist.

7. Bedienvorrichtung nach einem der Ansprüche 1 bis 6, **dadurch gekennzeichnet, dass** der Rastarm (40) in die Verrieglungsausnehmung (46) des Trägerelements (12) eingetaucht ist.

8. Bedienvorrichtung nach einem der Ansprüche 1 bis 6, **gekennzeichnet durch** einen innerhalb des Niederhalteelements (34) - oder alternativ außerhalb des Niederhalteelements (34) - angeordnetes feststehendes Widerlagerelement, das mit Abstand zum Rastarm (40) positioniert ist und diesem gegenüberliegt, und ein Lichtleitelement zum Leiten von Licht einer Lichtquelle zu einer Leuchtmarkierung an dem Drehbedienelement (32) - oder alternativ neben dem Drehbedienelement (32) -, wobei zur weiteren Verriegelung des Rastarms (40) das Lichtleitelement nach Art eines Passstücks sowohl an dem Rastarm (40) als auch an dem Widerlagerelement anliegt.

## Claims

1. Operating device, in particular for a vehicle component such as a heating, ventilation or air conditioning system, comprising
- a rotary operating element (32) supported for rotation about a rotation axis (14),
- a hollow shaft (16) defining the rotation axis (14) and protruding up from a support element (12), the hollow shaft having a cylindrical wall (18) which has an outer circumference as a first lateral surface (20) and an inner circumferential surface as a second lateral surface (22) facing away therefrom,
- a pivot bearing element (30) arranged at the rotary operating element (32), the pivot bearing element abutting on the first lateral surface (20) of the hollow shaft (16) and comprising a bearing projection (28) bearing on the open axial end (24) of the hollow shaft (16) averted from the support element (12), and
- a hold-down element (34) abutting on the second lateral surface (22) of the hollow shaft (16) and comprising an overlapping projection (36) which overlaps the bearing projection (28) of the pivot bearing element (30),
- wherein the hold-down element (34) comprises at least one elastic locking arm (40) for a locking connection with the hollow shaft (16) at the second lateral surface (22) thereof,
**characterized in**
- **that**, for preventing a bending that would cause a release of the locking engagement, the locking arm (40) cooperates with a locking recess (46) of the support element (12) or with a locking element (64) protruding up from the support element (12).

2. Operating device of claim 1, **characterized in that** the hold-down element (34) is inserted into the hollow shaft (16) and has an end protruding axially beyond the hollow shaft (16), said end having an end part (54), and that the rotary operating element (32) is designed as a rotary operating element surrounding the end part (54) on the outers side.

3. Operating device of claim 2, **characterized in that** a reflector (50) is arranged in the hold-down element (34) for reflecting light from a backlighting light source (52) to the end part (54), wherein at least one back-lightable function symbol (56) can be optically visualized at the end part (54).

4. Operating device of one of claims 1 to 3, **characterized in that** the support element (12) is formed integrally with the hollow shaft (16), or that the axial end of the hollow shaft (16) facing away from the rotary operating element (32) is arranged opposite the support element (12) and in particular abuts on the support element (12).

5. Operating device of one of claims 1 to 4, **characterized in that** the locking element (64) protrudes through a cutout (46) in the support element (12) and/or beyond said support element.

6. Operating device of one of claims 1 to 5, **characterized in that** the locking arm (40) (i) is plunged into a receiving indentation (66) of the locking element (64) or (ii) comprises a receiving indentation (72) into which a locking projection (70) of the locking element (64) is plunged.

7. Operating device of one of claims 1 to 6, **characterized in that** the locking arm (40) is plunged into the locking recess (46) of the support element (12).

8. Operating device of one of claims 1 to 6, **characterized by** a stationary counter bearing element arranged inside the hold-down element (34) - or, alternatively, outside the hold-down element (34) - which counter bearing element is positioned at a distance from and opposite the locking arm (40), and by a light guiding element for guiding light from a light source to a luminous marker at the rotary operating element (32) - or, alternatively, beside the rotary operating element (32) - wherein, for a further locking of the locking arm (40), the light guiding element abuts both on the locking arm (40) and on the counter bearing element in the manner of a fitting piece.

## Revendications

1. Dispositif de commande, en particulier pour un système d'un véhicule tel qu'un système de chauffage, d'aération et de climatisation, avec
- un élément rotatif de commande (32) monté tournant autour d'un axe de rotation (14),
- un axe creux (16) définissant l'axe de rotation (14), se dressant sur un élément de support (12) et ayant une paroi de cylindre (18) qui comprend une surface de pourtour extérieur constitutive d'une première surface d'enveloppe (20) et une surface de pourtour intérieur opposée à cette dernière et constitutive d'une seconde surface d'enveloppe (22),
- un élément de palier rotatif (30) disposé sur l'élément rotatif de commande (32), qui est en appui sur la première surface d'enveloppe (20) de l'axe creux (16) et comprend une saillie d'appui (28) qui est en appui sur l'extrémité axiale ouverte (24) de l'axe creux (16) opposée à l'élément de support (12), et
- un élément de pressage (34) qui est en appui sur la seconde surface d'enveloppe (22) de l'axe creux (16) et comprend une saillie de prise (36) qui a prise sur la saillie d'appui (28) de l'élément de palier rotatif (30),
- l'élément de pressage (34) comprenant au moins un bras élastique d'encliquetage (40) pour une connexion par encliquetage avec l'axe creux (16) sur la seconde surface d'enveloppe (22) de celui-ci,
**caractérisé en ce que**,
pour éviter une torsion conduisant à une ouverture de la connexion par encliquetage, le bras d'encliquetage (40) coopère avec un évidement de verrouillage (46) de l'élément de support (12) ou avec un élément de verrouillage (64) se dressant sur l'élément de support (12).

2. Dispositif de commande selon la revendication 1, **caractérisé en ce**
**que** l'élément de pressage (34) est inséré dans l'axe creux (16) et comprend une extrémité en dépassement de l'axe creux (16), qui comporte une pièce de terminaison (54), et en ce que l'élément rotatif de commande (32) est formé comme élément de commande à bague de rotation qui entoure la pièce de terminaison (54) de l'extérieur.

3. Dispositif de commande selon la revendication 2, **caractérisé en ce**
**qu'**il est disposé dans l'élément de pressage (34) un réflecteur (50) pour la réflexion de lumière d'une source de lumière de rétroéclairage (52) vers la pièce de terminaison (54), au moins un symbole de fonction (56) apte à être rétroéclairé étant susceptible d'être représenté optiquement sur la pièce de terminaison (54).

4. Dispositif de commande selon l'une des revendications 1 à 3,
**caractérisé en ce que** l'élément de support (12) est formé en une seule pièce avec l'axe creux (16) ou que l'axe creux (16) est disposé, avec son extrémité axiale opposée de l'élément rotatif de commande (32), en regard de l'élément de support (12) et est notamment en appui sur l'élément de support (12).

5. Dispositif de commande selon l'une des revendications 1 à 4,
**caractérisé en ce que** l'élément de verrouillage (64) traverse un évidement (46) de l'élément de support (12) et/ou dépasse celui-ci.

6. Dispositif de commande selon l'une des revendications 1 à 5,
**caractérisé en ce que** le bras d'encliquetage (40) (i) est plongé dans un creux de réception (66) de l'élément de verrouillage (64) ou (ii) comprend un creux de réception (72) dans lequel une saillie de verrouillage (70) de l'élément de verrouillage (64) est plongée.

7. Dispositif de commande selon l'une des revendications 1 à 6,
**caractérisé en ce que** le bras d'encliquetage (40) est plongé dans l'évidement de verrouillage (46) de l'élément de support (12).

8. Dispositif de commande selon l'une des revendications 1 à 6,
**caractérisé par** un élément de butée fixe disposé à l'intérieur de l'élément de pressage (34) - ou selon une alternative, à l'extérieur de l'élément de pressage (34) - qui est positionné à une distance du bras d'encliquetage (40) et est en regard de celui-ci, et un élément de guidage de lumière pour le guidage de lumière d'une source de lumière vers un marquage par lumière sur l'élément rotatif de commande (32) - ou en alternative, à côté de l'élément rotatif de commande (32) -, l'élément de guidage de lumière étant en appui, à la façon d'une pièce ajustée, aussi bien sur le bras d'encliquetage (40) que sur l'élément de butée, pour un verrouillage supplémentaire du bras d'encliquetage (40).
